# EUROPEAN PATENT APPLICATION

(11) **EP 1 237 074 A2**
(43) Date of publication of application: **04.09.2002**
(21) Application number: 01130468.0
(22) Date of filing: 20.12.2001
(51) Int. Cl.: G06F 9/44

(54) **Method and apparatus for digital data distributing system**

(30) Priority: 27.12.2000 JP 2000398096
(71) Applicant: Kabushiki Kaisha Toshiba, Tokyo (JP)
(72) Inventor: Hidehito, Izawa, c/o K.K. Toshiba, 1-chome, Minato-ku, Tokyo 105-8001 (JP)
(74) Representative: Henkel, Feiler, Hänzel

(57) **Abstract**

Disclosed is a data distributing system for distributing music data consisting of digital sound data, for example, to a portable device having a memory card. The system has a function for changing a bit rate at which data distribution is executed based on distribution conditions associated with usage or use conditions of the portable device. This data distributing system can construct a library system having stored therein a lot of music data for every music title. A user can download desired content data from the system to the memory card so as to be in conformance with usage of a portable device or use conditions such as the remaining capacity of the memory card.

## Description

The present invention generally relates to a data distributing system comprising a computer system. More particularly, the present invention relates to a system comprising a function for adjusting a bit rate when digital data is distributed.

In recent years, there have been developed a variety of portable terminals each using a memory card which is a removable type of recording medium. A PDA (personal digital assistant) is a typical portable terminal. A memory card generally includes a flash memory (flash EEPROM), and stores digital data such as sound data or image data, for example.

Some PDAs can reproduce a music by using digital data read out from the memory card or can display an image. In addition, apart from such general PDAs, there has been developed a portable device exclusively used for music reproduction or a PDA having a portable telephone function.

Where music and the like are reproduced by using such a terminal, in general, content data such as music stored in a library system is downloaded on a memory card for use in a portable terminal. Here, the library system includes: a server equipped with a hard disk drive (HDD) for storing data or a system which corresponds to a database for content data consisted in a personal computer (consisting of hardware and software).

In the meantime, sound data such as music has a quality during reproduction that depends on a bit rate (unit: kbps). A higher bit rate results in relatively higher quality. On the other hand, a higher bit rate increases data size.

Conventionally, where data is downloaded from the library system into a portable terminal via the Internet, for example, downloading is done at the same bit rate as that of storing data in the library.

Therefore, where high quality data is stored in the library system, data downloading at a bit rate for a high quality is executed at a portable terminal which is a distribution destination. In this case, the size of data to be downloaded from the system is relatively increased. Therefore, if the capacity of a memory card for use in the portable terminal is small, an amount of data which can be downloaded is limited. Where data distributed from the system is sound data such as music, the number of music pieces that can be stored in the memory card once is limited.

In the meantime, where music is reproduced by using the portable terminal, for example, it is not always required to enjoy music with the highest sound quality. For example, one may want only to listen to music while he is in train. In such a usage, it is convenient that as many music pieces as possible can be stored in the memory card, even if a reproduction sound quality is somewhat lowered.

However, when data is stored in the library system, if data size is reduced by lowering a bit rate, one cannot enjoy music in good sound quality with the portable terminal which is a distribution destination.

It is an object of the present invention to provide a data distributing system capable of adjusting a bit rate based on distribution conditions associated with usage of a portable terminal or its use condition where digital data is distributed to the portable terminal.

In accordance with one aspect of the present invention, there is provided a system for distributing digital data to a portable device including a recording medium. The system comprises:
a storage device which stores the digital data;
a determination device which determines a bit rate of the digital data in accordance with a predetermined distribution condition when digital data fetched from the storage device is distributed to the portable device; and
a transmission device which transmits the digital data fetched from the storage device at a bit rate determined by the determination device.

This summary of the invention does not necessarily describe all necessary features so that the invention may also be a sub-combination of these described features.

The invention can be more fully under stood from the following detailed description when taken in conjunction with the accompanying drawings, in which:
FIG. 1 is a block diagram depicting a configuration of a data distributing system according to an embodiment of the present invention;
FIG. 2 is a flow chart illustrating a basic operation of the system accordance to the embodiment;
FIG. 3 is a view showing a relationship between a sound quality and a bit rate according to the embodiment;
FIG. 4 is a flow chart illustrating a specific example according to the embodiment; and
FIG. 5 is a flow chart illustrating a downloading method according to a modified example of the embodiment.

Hereinafter, an embodiment of the present invention will be described with reference to the accompanying drawings.

### (System Configuration)

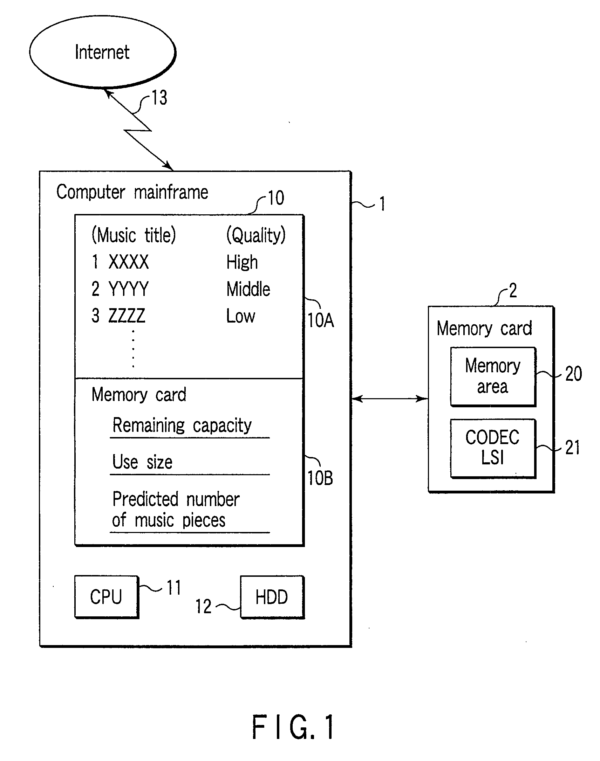

FIG. 1 is a block diagram depicting a configuration of a data distributing system according to this embodiment.

Assume that the data distributing system according to the embodiment is a system for downloading content data (here, referred to as music digital data) from a computer mainframe 1 which configures a personal computer or a server into a memory card 2 for use in a portable terminal such as PDA, for example. Further, in the embodiment is assumed a PDA having a sound reproduction function.

The computer mainframe 1 has a GUI (including display screens 10A and 10B) 10 and a hard disk drive (HDD) 12. This mainframe configures a library system in which the HHDD 12 is provided as a data storage device. Here, a lot of music data is stored for every music title at a bit rate for high quality (for example, 128 kbps) in the HDD 12. The CPU 11 executes a program prepared in advance, thereby acquiring specified music data from the HDD 12 according to an input operation at the GUI 10 and downloading (distributing) data in the memory card 2 included in the terminal.

The computer mainframe 1 comprises: an interface connected to the PDA or memory card 2 in order to carry out data transmission; and a communication interface 13 to be connected to Internet 3. The computer mainframe 1 also includes a function for downloading music data from the Internet 3 and storing the data in the library system.

The PDA according to the embodiment may be of a portable type with a portable telephone function or an image reproduction function other than a function for reproducing sound from music data. The PDA uses the memory card 2 in accordance with a predetermined standard (for example, PCMCIA standards). The memory card 2 roughly has a flash memory, and comprises: a memory area 20 which stores downloaded music data; and a CODEC·LSI 21 which realizes a data compressor/decompressor function. The memory card 2 stores ID information for identifying a device type of the card 2 (corresponding to identification information on the CODEC system) in the memory area 20 or CODEC·LSI 21.

### (Data Distributing Operation)

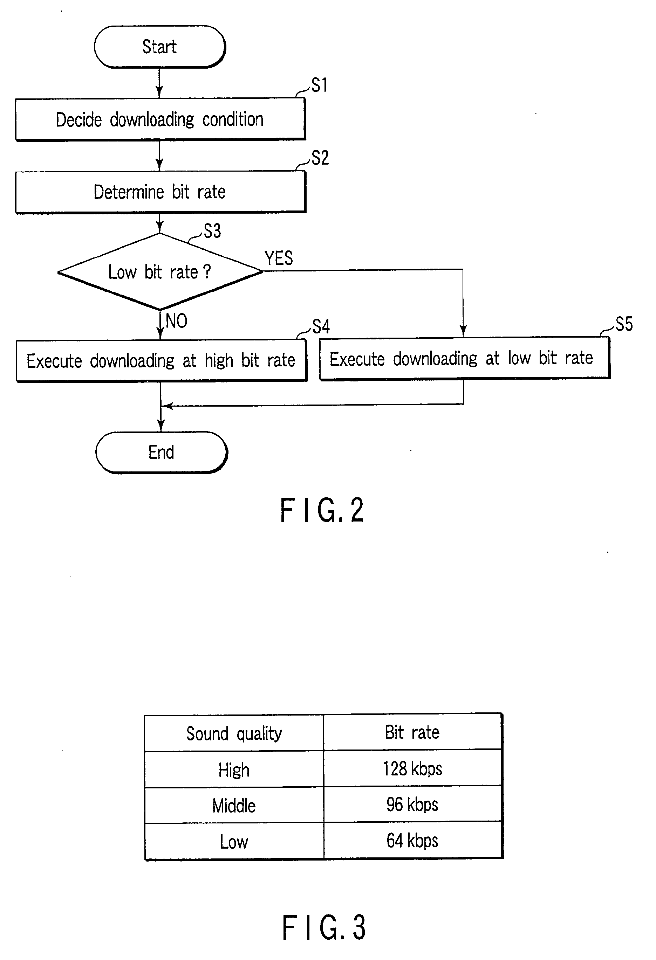

The system according to the embodiment (computer mainframe 1) basically decides a condition (a distribution condition or a downloading condition) when music data selected from the HDD 12 of the library system is downloaded, and determines a bit rate based on the condition, as shown in the flow chart of FIG. 2

### (steps S1 and S2).

Where a relatively low bit rate has been determined, the system downloads selected music data in the memory card 2 of the terminal at a low bit rate (YES in the step S3 or in the step S5). On the other hand, where a relatively high bit rate has been determined, the system downloads selected music data in the memory card 2 of the terminal at a high bit rate (NO in the step S3 and in the step S4).

Hereinafter, a specific example will be described.

The distribution condition or download condition corresponds to usage or use condition when a user uses a PDA. As shown in FIG. 1, by operating the GUI 10, a group of titles of music which can be downloaded and a menu screen for selecting a quality which corresponds to a sound quantity are displayed on a screen 10A. Assume that, for example, a display is vertically divided into two sections, an upper screen 10A is used as a screen associated with the computer mainframe 1, and a lower screen 10B is used as a screen associated with the memory card 2.

When a plurality of music titles and sound qualities for respective music pieces are selected from the menu screen 10A by operating the GUI 10, the CPU 11 fetches music data on the selected music titles from the HDD 12, and downloads them in the memory card 2. Here, the CPU 11 downloads each of them at a bit rate which corresponds to a sound quality set for each music piece.

FIG. 3 is a view showing a correlation between a sound quality and a bit rate. That is, when a high quality is selected for one music piece (XXXX), the CPU 11 downloads music data which corresponds to the music piece (XXXX) at a high bit rate (128 kbps). Further, when a low quality is selected for one music piece (YYYY), the CPU 11 downloads music data which corresponds to the music piece (YYYY) at a low bit rate (64 kbps).

As has been described above, if it is assumed that usage is a distribution condition, where the user attempts to enjoy music of one music piece (XXXX) with a high sound quality, the system downloads the music data in the memory card 2 at a high bit rate (128 kbps) according to selecting operation at the GUI 10. The user can enjoy the music of the selected music piece (XXXX) in high sound quality by reproducing it with a terminal equipped with the memory card 2.

In addition, where a low sound quality in which the user reproduces music will suffice, the system downloads the music data in the memory card 2 at a low bit rate (64 kbps). In this case, because of its low bit rate, the data size of music data can be relatively smaller. Thus, music data for relatively large number of music titles can be downloaded in the memory card 2 according to the capacity of the memory area 20. Therefore, as usage of the terminal, for example only while the user is in train, even if the sound quality of each music piece is somewhat lowered the user can listen to music of as many music titles as possible.

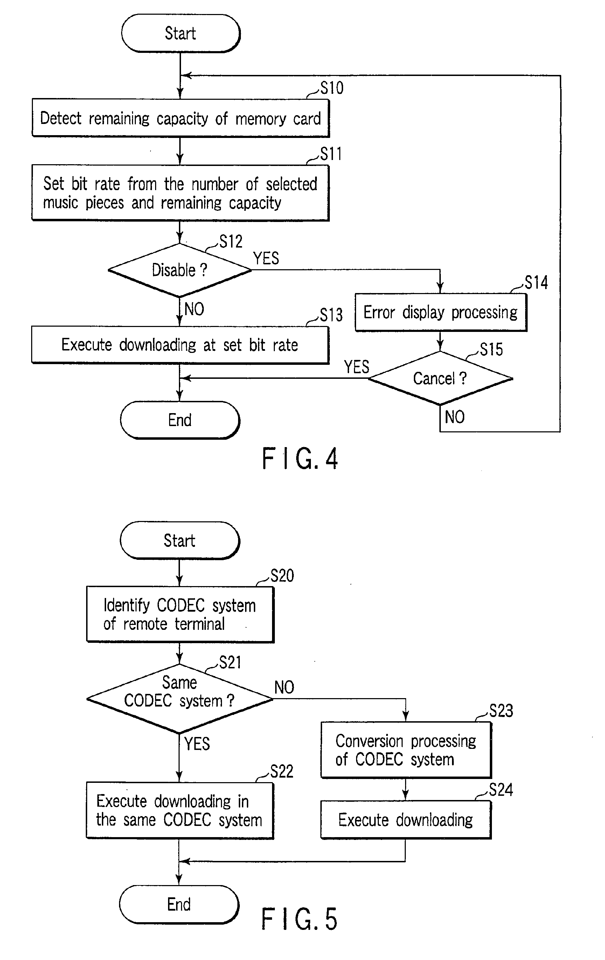

Further, another specific example will be described with reference to a flow chart of FIG. 4.

Assume that the computer mainframe 1 according to the embodiment has a function for detecting the remaining capacity of the connected memory card 2 (storable memory capacity), and has a function for displaying the capacity on a screen 10B. On the screen 10B, as shown in FIG. 1, apart from the remaining capacity of the memory card 2, information such as use size corresponding to a bit rate (storable data size) or predicted music pieces is to be displayed.

When the remaining capacity of the memory card 2 is detected the CPU 11 automatically set a bit rate from the number of music pieces selected by operating the GUI 10 (a total number of selected music titles) and the remaining capacity (steps S10 and S11). That is, the CPU 11 computes a size of storable data from the remaining capacity, and compares the data size with a total data size of the music pieces for each bit rate.

Where the remaining capacity of the memory card 2 is insufficient, for example, where music data for selected music pieces cannot be downloaded even at the lowest bit rate, the CPU 11 executes predetermined error display processing on the screen 10A (YES in the step S12 and in the S14). That is, the CPU 11 displays a command to increase a storage capacity by reducing the selected music pieces in number or erasing the memory of the memory card 2.

If downloading is not canceled, the CPU 11 repeats processing from the step S10 (NO in the step S15). When the CPU 11 has successfully set a proper bit rate (a relatively high rate) from the number of selected music pieces and the remaining capacity of the memory card 2, the CPU executes downloading at the bit rate (NO in the step S12 and in the step S13).

As has been described above, the system automatically set a bit rate based on the remaining capacity of the memory card 2 and the number of selected music pieces (corresponding to data size) which are distribution conditions. Therefore, if the remaining capacity of the memory card 2 is large, a use state is established such that relatively large number of music pieces are selected, and the reproduction sound quality is relatively lowered. In addition, a use state is established such that relatively small number of music pieces are selected, and the reproduction sound quality is relatively good. On the other hand, even if the remaining capacity of the memory card 2 is small, a state is established such that the reproduction sound quality is not lowered so much by relatively reducing music pieces. In short, downloading at a proper bit rate can be automatically carried out according to the use condition of the terminal.

In short, for example, there can be provided a data distributing system for downloading music data for each music piece (consisting of digital sound data) in the PDA having a recording medium such as a memory card. This system has a function for changing a bit rate during downloading based on the distribution conditions associated with usage or use condition of the terminal. A specific example of application of this data distribution system is shown as a system in which a library system being a type of database which stores a lot of music data for every music title is composed of a server or a personal computer, the system having an interface which can be connectable with the PDA.

With such a system, where the user selects quality information which corresponds to sound quality for each music title, for example, as a distribution condition, downloading is executed at a bit rate determined based on the quality information. Therefore, for example, music data with a title of music piece requiring a high quality can be downloaded in a terminal while music data for low quality but of a large number of music pieces can be downloaded.

In addition, it is possible to automatically set a bit rate during downloading from a size of music data on the selected music pieces based on the remaining capacity of the memory card for use in a terminal as another distribution condition. Thus, music data for the number of music pieces corresponding to the remaining capacity of the memory card can be downloaded.

In this manner, the content data requested by the user can be downloaded from the library system to the terminal so as to be in conformance with the DPA usage or use conditions such as the remaining capacity of the memory card. Therefore, as a result, the performance of the portable terminal such as PDA can be improved.

### (Modified Example)

FIG. 5 is a flow chart concerning a modified example of the embodiment. This modified example relates to a system capable of downloading data in the CODEC system which conforms with the CODEC system of the terminal.

When the memory card 2 (or a terminal) is connected to the computer mainframe 1, the CPU 11 reads out ID information from the memory area 20 of the memory card 2 or CODEC·LSI 21, and identifies the CODEC system (step S20). When the identified CODEC system of the terminal is identical to that in which the music data is stored, the CPU 11 executes downloading in the CODEC system (YES in the step S21 and in the step S22). Here, music data downloading from the computer mainframe 1 (i.e., a library system) to the memory card 2 is executed according to the downloading conditions (distribution conditions) as described previously.

On the other hand, if the identified CODEC system of the terminal is different from that in which the music data is stored, the CPU 11 adaptively converts the CODEC system into the CODEC system of the terminal (NO in the step S21 and in the step S23). Then, the CPU 11 executes downloading in the converted CODEC system (step S24).

As has been described above, even for the terminal employing the CODEC system which differs from that in which the music data is stored in the library system, the music data can be downloaded so as to be in conformance with the CODEC system of the terminal. Therefore, data distribution targets for content data in the same specification (types of terminals) can be expanded.

In the embodiment and modified example is assumed music data as content data. However, the present invention is not limited to this, but can be applied to a case of image data such as video image or still image. In addition, the downloading system environment can be applied to a case of network environment in which downloading from a provider's server via Internet is carried out as well as local system environment in which the memory card 2 is connected to the personal computer.

As has been described above in detail, where data is downloaded and distributed to a terminal, a bit rate can be set so as to be in conformance with distribution conditions such as usage or use conditions of the terminal. Therefore, data distribution can be achieved so as to be in conformance with a use state of a memory card for use in a terminal or usage of the terminal. In addition, downloading at a proper bit rate can be automatically executed, and thus, a data distributing system with its excellent operability can be provided. In short, requested content data or the like , for example, can be downloaded from a library so as to be in conformance with usage of the terminal or use conditions such as the remaining capacity of the memory card. In this manner, the usage and use conditions of the terminal storing content data are expanded. As a result, the performance of the terminal can be improved.

## Claims

1. A system for distributing digital data to a portable device including a recording medium, **characterized by** comprising:
a storage device which stores said digital data;
a determination device which determines a bit rate of said digital data in accordance with a predetermined distribution condition when the digital data fetched from said storage device is distributed to said portable device; and
a transmission device which transmits the digital data fetched from said storage device to said portable device at a bit rate determined by said determination device.

2. A system according to claim 1, **characterized in that** said portable device is a PDA device which uses a memory card as said recording medium.

3. A system according to claim 1, **characterized in that** said determination device comprises a microprocessor.

4. A system according to claim 1, **characterized in that** said determination device refers to a correlation between quality information on said digital data and a bit rate, and determines said bit rate based on selection of the quality information.

5. A system according to claim 1, **characterized by** further comprising:
a detecting device which detects a remaining storage capacity of said recording medium included in said portable device, wherein said determination device determines said bit rate with a relationship between the remaining capacity of the recording medium and a size of said digital data being defined as said distribution condition.

6. A system according to claim 1, **characterized in that** said portable device uses as said recording medium a memory card which stores digital data being sound data or image data.

7. A system for distributing digital data to a portable device including a recording medium, **characterized by** comprising:
a storage device which stores said digital data;
identification means for identifying a type of CODEC provided at said portable device;
setting means for setting a current CODEC system to a CODEC system identified by said identification means; and
a transmission device for using the CODEC system set by said setting means, and transmitting digital data fetched from said storage device to said portable device.

8. A system according to claim 7, **characterized in that** the CODEC provided at said portable device is a compressor/decompressor designed in a predetermined standard.

9. A system according to claim 8, **characterized in that** said transmission device uses the compressor which corresponds to the standard of CODEC provided at said portable device, thereby compressing the digital data fetched from said storage device and transmitting the data to said portable device.

10. A system according to claim 8, **characterized in that** said portable device includes reproduction means for decompressing and reproducing the sound data or image data stored in said recording medium with said CODEC.

11. A method of distributing digital data from a storage device to a portable device including a recording medium, the method **characterized by** comprising:
fetching digital data to be distributed to said portable device from the digital data stored in said storage device;
determining a bit rate of the digital data in accordance with a predetermined distribution condition; and
transmitting the digital data fetched from said storage device to said portable device at said determined bit rate.

12. The method according to claim 11, **characterized by** further comprising:
referring to a correlation between quality information on said digital data and a bit rate, and then, determining said bit rate based on selection of the quality information.

13. The method according to claim 11, **characterized by** further comprising:
detecting a remaining storage capacity of said recording medium included in said portable device; and
determining said bit rate with a relationship between the remaining capacity of the recording medium and a size of said digital data being defined as said distribution condition.

14. The method according to claim 11, **characterized by** further comprising:
identifying a type of CODEC provided at said portable device;
setting a current CODEC system to a CODEC system identified by said identification means; and
using the CODEC system set by said setting means to transmit the digital data fetched from said storage device to said portable device.

15. The method according to claim 11, **characterized in that** the digital data fetched from said storage device is downloaded in said portable device at said determined bit rate.
